# EUROPEAN PATENT SPECIFICATION

(11) **EP 2 074 432 B1**
(45) Date of publication and mention of the grant of the patent: **20.04.2011**
(21) Application number: 07834742.4
(22) Date of filing: 13.09.2007
(51) Int. Cl.: G01P 5/14, G01P 5/24, G01F 1/34, G01F 1/66, G01F 7/00

(54) **ARRANGEMENT FOR MEASURING FLUID FLOW VELOCITY**
ANORDNUNG ZUR MESSUNG EINER FLÜSSIGKEITS-FLUSSGESCHWINDIGKEIT
SYSTÈME DE MESURE DE VITESSE D'ÉCOULEMENT DE FLUIDE

(30) Priority: 13.09.2006 NO 20064106
(43) Date of publication of application: 01.07.2009
(73) Proprietor: Fluenta AS, 5828 Bergen (NO)
(72) Inventor: JOHANNESSEN, Atle, 5146 Fyllingsdalen (NO)
(74) Representative: Thrane, Dag
(86) International application number: PCT/NO2007/000324
(87) International publication number: WO 2008/033035

(56) References cited:
- WO-A1-2005/040732
- US-A- 2 573 430
- US-A- 4 596 133
- US-A- 4 646 575
- US-A1- 2003 094 052
- US-A1- 2004 006 436

## Description

This invention relates to an arrangement for a velocity measuring instrument for measuring fluid flow velocity in pipes or pipelines, and a system including the instrument, and preferably related to high velocity gas flows, e.g. in flare systems.

In gas and oil production there is often a need for measuring the velocity of fluids passing in pipes and pipelines. In relation to gas transporting systems acoustic measurements are usually utilized, e.g. by transmitting acoustic waves in a direction having a component in the direction of the gas flow, and measuring the frequency shift or changes in the propagation time of the signal to provide the velocity of the gas. Several embodiments of this solution are discussed in US4596133 and US 2004/006436.

Pressure meters have also been known for the use in flow measurements, such as the solutions described in US 2573430, WO97/30333 and US2003/0094052. These, however, have the disadvantage that they require placing obstructions in the flow which in turn may affect the flow conditions. The latter of these use both an orifice and an acoustic meter to monitor the flow velocity.

In some cases, such as flare systems, the velocity may vary within a large range of speeds. The acoustic waves transmitted through the flow do to a degree follow the flow, and above certain gas velocities the acoustics waves are deflected so that they do not reach the receiving transducer. Thus the velocity measurement is lost, and so is the possibility to measure the amount of gas transported through the pipe. This problem can occur at different velocities depending on measuring system, pipe width etc, but in a typical flare system it may arise in flow rates above 80-100 m/s.

It is an object of this invention to provide a measuring system capable of measuring gas flow velocities in the full range from low to high flow rates, especially as a supplement to existing system capable of measuring lower flow rates in gas flare system. In flare or torch system related to oil or gas production this is important, as the amount of gas burned in the torch is related to taxes connected to the CO₂ quota, which evidently will require measurements when the flow rate through the torch is high.

The objects above are thus obtained according to the invention as stated above and being characterized as described in the independent claim.

According to the invention the flow measurement is provided by a dual system wherein the acoustic system handles the lower range while the differential pressure (or difference between two pressure sensors) takes over in the higher range. The pressure measurements make the use of the cavities in the pipe wall already provided for the acoustic sensors.

The invention will be described below with reference to the accompanying drawings, illustrating the invention by way of examples.
- Figure 1: illustrates a preferred embodiment of the invention based on the measurement of differential pressure.
- Figure 2: illustrates a simplified embodiment of the invention, comparing two pressure measurements.
- Figure 3: illustrates an alternative to the embodiment in figure 1 comparing two separate pressure sensors.
- Figure 4: illustrates an alternative to the embodiment in figure 2 measuring differential pressure.

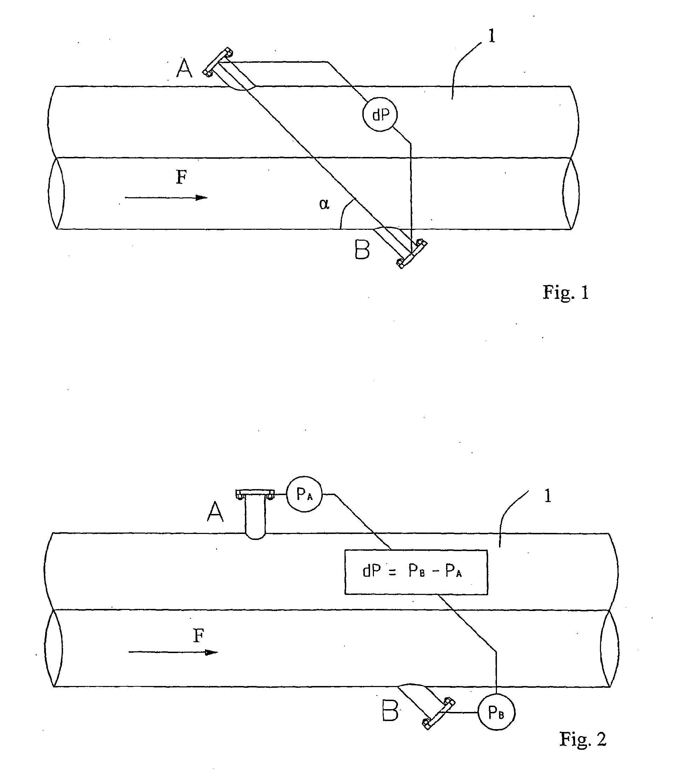

Figure 1 illustrates a section of a pipe 1 having two protruding parts A,B defining channels or openings having an angle α relative to the pipe axis. Fluids F moving along the pipe hitting an opening being directed against the flow will be diverted into the opening B and have a momentum which introduces turbulence or a stationary pressure wave, as well as an increase in the pressure in the opening. Similarly fluids contained in an opening A directed along the flow will be subject to turbulence, but also be drawn out of the opening thus providing a reduced pressure therein. When the gas flows passed the channels a pressure buildup may be measured in the channel B facing the flow and a reduced pressure may be measured in the channel A directing along the flow direction. For high flow rates these pressures depend on the velocity of the flow, and may thus provide a measure related to the flow velocity.

According to the preferred embodiment the channels are provided with traditional acoustic flow velocity sensors in addition to the pressure sensors at the openings A,B, the openings being positioned approximately in line so as to transmit acoustic waves between the sensors. As mentioned above the acoustic sensors will provide measurements up to about 80-100 m/s, while the pressure sensors will increase their sensitivity with the flow velocity, and thus increase the sensitivity range of the flow velocity measurements. In this preferred embodiment the openings A,B are aligned because of the propagation of acoustic signals between the acoustic transducers. In other embodiments not combined with the acoustic measure this alignment is not necessary and the pressure sensors may be positioned otherwise. For practical reasons, and to ensure measurements in the same flow regime the pressure sensors should not be positioned too far apart.

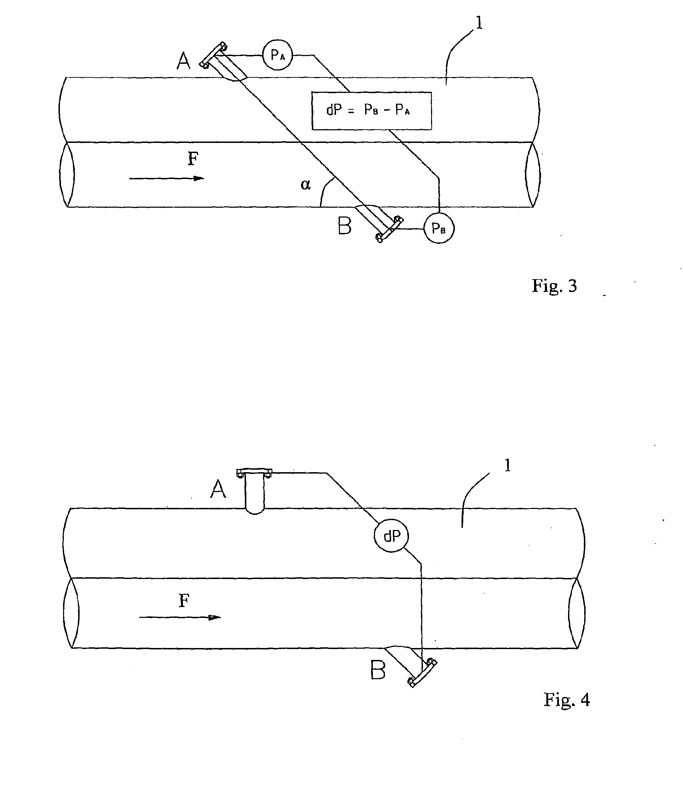

In figure 1 and figure 4 the pressure measurements are performed as a differential measurement dP between the two positions in the pipe, and the flow velocity may be calculated from dP. As an alternative one pressure sensor is positioned at each point and dP is calculated from the different measurements P_{A},P_{B}. The chosen solution here depends on the available equipment. Both individual and differential pressure meters are available and may be chosen by a person skilled in the art according the use in each situation.

Figures 2 and 4 show a solution in which only one of the pressures measuring channels is positioned in a channel having an angle relative to the flow direction or pipe axis. This may reduce the sensitivity, but may be used in some situations, for example if the the acoustic sensors are small and may be positioned with an angle relative to the cavity in which they are located. The pressure measured by the sensor directed perpendicular relative to the flow direction may be positioned close to the inner pipe wall, thus not defining an opening or recess therein, and may be constituted by a pressure sensor typically present in the pipe for monitoring the pressure conditions.

As indicated in the figures the channels A,B are constituted by standard mounts for acoustic sensors or pressure sensors. The dimensions of the channels will thus in the preferred embodiment of the invention be related to existing features in the pipe. The size of the opening may however, be adjusted by adjusting the position of the acoustic sensor or a plug in the channel, so as to obtain a chosen channel depth. The specific depth may vary with the present conditions and be chosen to minimize such disturbances from turbulence and waves in the opening. Fluctuating pressure signals may also be handled by software filtering the measured pressure e.g. to provide a mean pressure signal over a chosen time period.

The pressure sensors may be of any available type adapted to operate within the pressures related to the specific use, and with a sensitivity chosen accordingly. The response time of the sensor may also be taken into consideration if pressure fluctuations, e.g. due to standing waves or turbulence, is to be monitored. The pressure sensors per se are therefore not described in any detail here.

The angle of the openings α will in the preferred embodiment incorporating acoustic sensors be approximately 45 degrees, according to a specific solution the upstream opening in the first position A has an angle of 48 degrees while the downstream opening in position B has an angle of 42 degrees, thus compensating to a certain degree for the deviation in the direction of the acoustic wave because of the fluid flow.

The dimensions and depth of the openings and channels may be adapted to the specific situations, so as to optimize the conditions to reduce disturbances from turbulence etc in the channel. For example the depth may be adjustable in per se known ways by adjusting the position of the sensors inside the channel or means may be used to control the gas movements therein.

In addition to the pressure and possible acoustic sensors in the openings temperature sensors may be provided for monitoring the conditions in the flow. The temperature sensor may be integrated into the acoustic transducers or pressure sensors, or may be provided as a separate unit, e.g. for positioning in a sensor holder adapted to receive all of these sensors and transducers. In addition to monitor the general conditions in the flow the temperature sensors will aid the measurements providing a possibility for compensating for temperature induced changes in the propagation velocity of the acoustic signals.

According a typical example of the preferred embodiment of the invention the transducer holders constituting the channels have inner diameters of 49 mm and maximum depths of 200 mm. In flare applications the pipe diameter is typically 460 mm (18") and the line pressure is typically maximum 5 bar at maximum flow velocity.

To summarize, the invention thus relates to an arrangement for measuring fluid flow velocity, especially in pipes or pipelines, the pipe wall comprising at least two openings with corresponding cavities for receiving acoustic transducers and pressure sensors or probes therein, where at least one of the cavities and preferably both have an angle with respect to the flow direction being different from 90° and that the sensor or probe is positioned so as to define a cavity for the flowing fluid inside the opening. The transducers, sensors or probes are coupled to a calculation unit being adapted to calculate the flow velocity based on pressure difference between openings as well as the differences in acoustic velocity information. .

According to the preferred embodiment of the invention the acoustic velocity measurement includes two acoustic transducers positioned on opposite sides of the flow, the line between said transducers having an angle relative to the flow between in the range of 15-75°, preferably approximately 45°, relative to the flow direction, and being adapted to transmit acoustic energy between said transducers. The calculation unit is in a per se known way adapted to calculate the flow rate based on the acoustic signal transmitted and received at said transducers. The acoustic transducers are positioned in the cavities in the pipe wall having axis being essentially parallel to the line between said transducers and wherein said pressure sensors are positioned in said recesses.

## Claims

1. Velocity measuring arrangement for measuring fluid flow velocity, in pipes or pipelines (1), the pipe wall comprising two openings in different axial positions relative to the flow direction, each defining a cavity (A,B) for the flowing fluid inside the opening, wherein each cavity (A,B) contains acoustic transducers for transmitting and/or receiving acoustic energy between each other, the acoustic transducers being coupled to a calculation unit, said calculating unit being adapted to calculate the flow velocity based on the acoustic wave velocity measured in the flow,
**characterized in that** a first of the two cavities has an angle (α) with respect to the flow direction (F) being different from 90°, the opening of which having a direction against the flow direction so as to cause a pressure buildup in said first cavity, and the second cavity has an angle relative to the flow direction being 90° or less in the direction with the flow direction so as to provide a pressure difference in said cavities, and being aligned on opposite sides of the flow (F) along essentially the same axis,
wherein each cavity (A,B) contains a pressure sensor or probe and the output from said sensors or probes is coupled to said calculation unit being adapted to calculate the flow velocity based on pressure in said cavities.

2. Arrangement according to claim 1, wherein the calculation unit includes a differential pressure meter measuring the differential pressure between the pressure communicated from said probes or sensors.

3. Arrangement according to claim 1, wherein the calculation unit is adapted to receive pressure indicating signals from pressure sensors positioned in said openings and for calculating the flow velocity from these signals.

4. Arrangement according to claim 1, wherein said angle α is in the range of 15-75°, preferably approximately 45°, against the flow direction.

5. Arrangement according to claim 1, wherein a temperature sensor is included in at least one of said openings for measuring the temperature in said flow.

## Patentansprüche

1. Geschwindigkeitsmessanordnung zum Messen der Fließgeschwindigkeit von Fluiden in Rohren oder Pipelines (1), wobei die Rohrwand zwei Öffnungen an bezüglich der Fließrichtung verschiedenen axialen Positionen umfasst, welche jeweils eine Kavität (A, B) für das innerhalb der Öffnung fließende Fluid bilden, wobei jede Kavität (A, B) akustische Wandler zum Übertragen und/oder Empfangen von akustischer Energie untereinander enthält, wobei die akustischen Wandler mit einer Berechnungseinheit verbunden sind, wobei die Berechnungseinheit geeignet ist, die Fließgeschwindigkeit auf Grundlage der im Fluss gemessenen akustischen Wellengeschwindigkeit zu berechnen,
**dadurch gekennzeichnet, dass** eine erste der beiden Kavitäten einen Winkel (α) in Bezug auf die Fließrichtung (F), welche verschieden von 90° ist, aufweist, und deren Öffnung derart eine Richtung gegen die Fließrichtung aufweist, dass ein Druckaufbau in der ersten Kavität bewirkt wird, und die zweite Kavität einen Winkel bezüglich der Fließrichtung aufweist, welcher 90° oder weniger in der Richtung mit der Fließrichtung ist, um eine Druckdifferenz in den Kavitäten vorzusehen, und wobei sie auf entgegengesetzten Seiten des Durchflusses (F) entlang im Wesentlichen der gleichen Achse angeordnet sind,
wobei jede Kavität (A, B) einen Drucksensor oder -fühler enthält und die Ausgabe von diesen Sensoren oder Fühlern mit der Berechnungseinheit verbunden wird, welche geeignet ist, die Fließgeschwindigkeit auf Grundlage des Drucks in den Kavitäten zu berechnen.

2. Anordnung nach Anspruch 1, wobei die Berechnungseinheit einen Differenzdruckmesser enthält, welcher den Differenzdruck zwischen dem von den Fühlern oder Sensoren übermittelten Druck misst.

3. Anordnung nach Anspruch 1, wobei die Berechnungseinheit geeignet ist, Signale, welche den Druck anzeigen, von in den Öffnungen positionierten Drucksensoren zu empfangen und die Fließgeschwindigkeit von diesen Signalen zu berechnen.

4. Anordnung nach Anspruch 1, wobei der Winkel α im Bereich von 15-75°, vorzugsweise etwa 45°, gegen die Fließrichtung liegt.

5. Anordnung nach Anspruch 1, wobei ein Temperatursensor in zumindest einer der Öffnungen zum Messen der Temperatur im Durchfluss enthalten ist.

## Revendications

1. Agencement de mesure de vitesse pour mesurer la vitesse d'un écoulement de liquide dans des tuyaux ou canalisations (1), la paroi de tuyau comprenant deux ouvertures dans différentes positions axiales par rapport à la direction d'écoulement, chacune définissant une cavité (A, B) pour le liquide s'écoulant à l'intérieur de l'ouverture, dans lequel chaque cavité (A, B) contient des transducteurs acoustiques pour émettre et/ou recevoir de l'énergie acoustique entre elles, les transducteurs acoustiques étant couplés à une unité de calcul, ladite unité de calcul étant conçue pour calculer la vitesse d'écoulement sur la base de la vitesse d'onde acoustique mesurée dans l'écoulement,
**caractérisé en ce qu'**une première des deux cavités a un angle (α) par rapport à la direction d'écoulement (F) qui est différent de 90°, dont l'ouverture a une direction allant à l'encontre de la direction d'écoulement de manière à entraîner une remontée de pression dans ladite première cavité, et la seconde cavité a un angle par rapport à la direction d'écoulement qui est de 90° au maximum dans la même direction que la direction d'écoulement de manière à fournir une différence de pression dans lesdites cavités, et est alignée sur des côtés opposés de l'écoulement (F) sensiblement le long du même axe,
dans lequel chaque cavité (A, B) contient un capteur de pression ou une sonde et la sortie provenant desdits capteurs ou desdites sondes est couplée à ladite unité de calcul conçue pour calculer la vitesse d'écoulement sur la base de la pression dans lesdites cavités.

2. Agencement selon la revendication 1, dans lequel l'unité de calcul comprend un pressiomètre différentiel mesurant la pression différentielle entre la pression communiquée par lesdites sondes ou lesdits capteurs.

3. Agencement selon la revendication 1, dans laquelle l'unité de calcul est conçue pour recevoir des signaux indiquant une pression provenant de capteurs de pression positionnés dans lesdites ouvertures et pour calculer la vitesse d'écoulement à partir de ces signaux.

4. Agencement selon la revendication 1, dans lequel ledit angle α est dans la plage de 15 à 75°, de préférence environ 45°, à l'encontre de la direction d'écoulement.

5. Agencement selon la revendication 1, dans lequel un capteur de pression est inclus dans au moins une desdites ouvertures pour mesurer la température dans ledit écoulement.
